Europäisches Patentamt

European Patent Office

Office européen des brevets

(19)

(11) Publication number: **0 042 135**
**B1**

## (12) EUROPEAN PATENT SPECIFICATION

(45) Date of publication of patent specification: **18.01.84**

(21) Application number: **81104458.5**

(22) Date of filing: **11.06.81**

(51) Int. Cl.³: **C 03 B 37/025,**
**C 03 C 13/00**

(54) **Process for reducing the hydroxyl-group content in preforms for optical fibres manufactured by MCVD process.**

(30) Priority: **16.06.80 IT 6793480**

(43) Date of publication of application:
**23.12.81 Bulletin 81/51**

(45) Publication of the grant of the patent:
**18.01.84 Bulletin 84/3**

(84) Designated Contracting States:
**AT BE CH DE FR GB LI NL SE**

(56) References cited:
**FR - A - 2 384 725**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Modone, Eros**
**Via Cibrario, 45**
**Torino (IT)**
Inventor: **Roba, Giacomo**
**Via Allegro, 63/5**
**Cogoleto (GE) (IT)**

(74) Representative: **Riederer Freiherr von Paar zu Schönau, Anton et al,**
**Freyung 615 Postfach 2664**
**D-8300 Landshut (DE)**

Courier Press, Leamington Spa, England.

Process for reducing the hydroxyl-group content in preforms for optical fibres manufactured by the
MCVD process

The present invention relates to transmission media for telecommunications systems using light radiations and more particularly it relates to a process for reducing the hydroxyl group content in preforms for optical fibres manufactured by the MCVD process (modified chemical vapour deposition process), in which the hydrogen in the hydroxyl group is replaced by deuterium, the preforms being each supported by a silica supporting tube.

It is known that in the intersection region between the ultra-violet absorption curves due to electron transition and the IR absorption deriving from molecular vibration, silica, which is the raw material for manufacturing optical fibres, presents a minimum attenuation window. As a consequence light wavelengths ranging within these values can be conveniently used.

At the same time attempts have been made to reduce during fibre manufacturing the contaminations that might cause losses at the same wavelengths. In particular the hydroxyl group (—OH) contamination of the silica matrix from which the fibre is drawn gives rise to absorption peaks just at the minimum-attenuations window, ranging from 0,7 $\mu$m to 1,6 $\mu$m.

In this interval there are two absorption peaks relating to the second and third overtones of the fundamental vibration at 2,8 $\mu$m of the hydrogen-oxygen bond, which reduce by considerable amounts the band which can be used for the transmission.

The presence of hydroxyl groups in optical fibres is due to their presence in the preform from which the fibres are drawn.

These preforms, manufactured by MCVD process (Modified Chemical Vapour Deposition), that is by inside vapour-phase deposition, result, in turn, in contamination by —OH groups or by other hydrogenated compounds present in basic reagents, such as halides and oxygen, and in the supporting tube. A reduced reagent contamination can be obtained by various processes, such as purification by distillation, by sublimation, by filtering, by $Cl_2$ photochemical activation or by the use of deuterated reagents (see e.g. FR - A 23 84 725); on the other hand the problem of the contamination of the preform supporting tube has not yet been solved satisfactorily.

The problem arises due to the diffusion of the impurities contained in the tube towards the internally deposited layers of doped silica.

The diffusion phenomenon is facilitated by the high temperature attained in some phases of the fabrication process. This occurs due to the fact that impurity concentration decreases exponentially towards the preform axis, and then towards the fibre axis, this being typical of the diffusion phenomenon.

The use of buffer layers obtained by low-viscosity compounds between the tube and the first layers of the preform has only a limited effect in reducing the contamination.

These problems are solved by the process of the present invention which process is characterized in that only the hydrogen of the hydroxyl groups present in the internal walls of the silica supporting tube is exchanged in situ with deuterium at least at said internal walls. This process prevents the supporting tube from being contaminated by hdroxyl groups and then eliminates disadvantageous absorption peaks at the wavelengths useful for optical-fibre transmission.

The invention will be made clearer by the following description of a preferred embodiment, given by way of example and not in a limiting sense, and by the annexed drawings in which:

Fig. 1 is a schematic representation in partial cross sectional view of a first equipment for treating the supporting tube;

Fig. 2 is a schematic sectional view of a second equipment.

According to the present invention an isotopic exchange between hydrogen of hydroxyl contaminating groups and deuterium (D) is carried out so as to obtain inside the silica matrix, which forms the supporting tube, D—O bonds instead of H—O bonds.

By this exchange the fundamental vibration of the H—O bond is obviously replaced by the fundamental vibration of the D—O bond, which has a wavelength of about 3,9 $\mu$m.

The second harmonic, which entails the higher increase in the light radiation attenuation, has a wavelength of about 1,95 $\mu$m and therefore it falls outside the range used for the transmission.

The third harmonic at 1,3 $\mu$m wavelengths is still within the range which can be used, but is inferior by about 90 dB/km/ppm to the second harmonic, therefore its contribution is negligible.

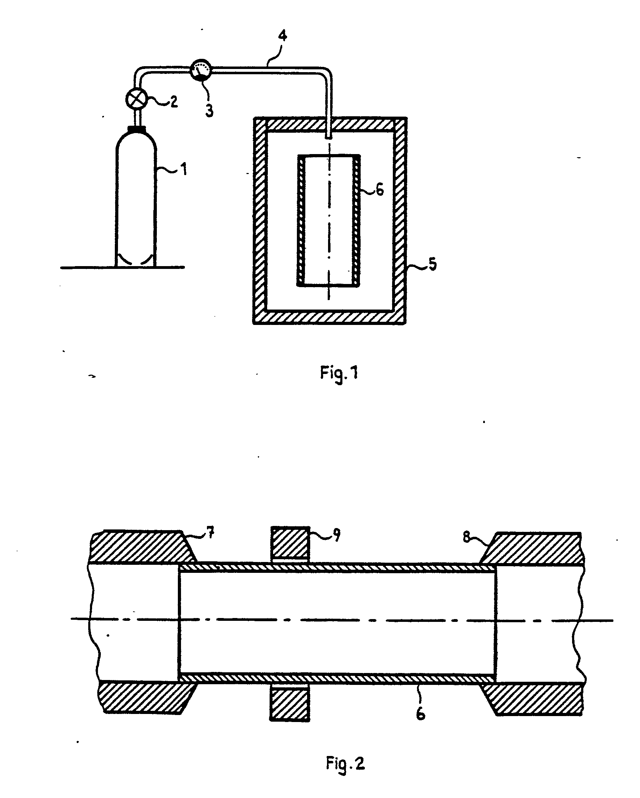

Hydrogen can be replaced by deuterium with various processes; two of them will hereinafter be described with reference to Figures 1 and 2.

Reference 1 in Fig. 1 denotes a container for deuterium, which through a valve 2 and a flow controller 3 is connected via tube 4 with a sealed muffle-furnace 5, which can be pressurized.

The supporting tube 6 is housed inside it.

The process is carried out in two different phases. In the first phase deuterium adsorption by the supporting tube is obtained by the immersion of the whole tube in a deuterium atmosphere inside the furnace 5 at a temperature ranging from 100 to 200°C, for a few hours.

In the second phase the exchange is thermally activated by raising the furnace temperature to at least 500°C for about one hour.

The exchange between hydrogen and deuterium takes place at this temperature; the reaction is facilitated by the different bond energy (463 KJ.mol$^{-1}$ of H—O bond and 469 KJ · mol$^{-1}$ of D—O bond at 25°C).·

Fig. 2 represents a second equipment for carrying out the process.

The drawing relates to a typical equipment for manufacturing preforms by MCVD process with two sealed mandrels 7 and 8, closed on the supporting tube 6, and a ring furnace 9.

In this example the process is also carried out in two successive phases. In the first deuterium adsorption is induced on the inner walls of the tube, making deuterium flow only inside the tube itself, duly pressurized. A temperature ranging from 100 to 200°C is easy to reach with a normal non-pressurized furnace, placed outside the supporting tube.

In the second phase the exchange is carried out in deuterium flow by the use of the same ring furnace 9, which will be used for MCVD process. Since as a rule said furnace is small, the exchange is localized in a limited annular region and is extended to the whole internal surface by means of a flow translation of the furnace itself, while mandrels 7 and 8 rotate the tube around its axis.

In the latter case contamination is eliminated only inside the supporting tube, but this does not give rise to problems as the deposit of doped silica is only in contact with the inner walls. In addition the tube is not to be further handled between the operations of isotopic exchange and deposition for preform manufacturing, therefore accidental contaminations are avoided.

## Claims

1. Process for reducing the hydroxyl group content in preforms for optical fibres manufactured by the MCVD process in which the hydrogen in the hydroxyl group is replaced by deuterium, the preforms being each supported by a silica supporting tube, characterized in that only the hydrogen of the hydroxyl groups present in the internal walls of the silica supporting tube (6) is exchanged in situ with deuterium at least at said internal walls.

2. Process according to claim 1, characterized in that the exchange between hydrogen and deuterium is obtained first by inducing deuterium adsorption at least on the internal walls of said supporting tube and then by thermally activating the exchange.

3. Process according to claim 2, characterized in that said supporting tube (6) is placed in a deuterium atmosphere inside a sealed muffle-furnace (5), which can be pressurized, at a temperature ranging from 100 to 200°C for a few hours and afterwards at a temperature of at least 500°C for about an hour.

4. Process according to claim 2, characterized in that said supporting tube (6) is placed where the preform for optical fibres is being manufactured by the MCVD process and is rotated, deuterium is fed inside it for a few hours and the temperature is kept between 100 and 200°C with a muffle furnace and then said tube is heated to a temperature of at least 500°C along annular regions by a ring furnace capable of translation parallel to the tube axis.

## Patentansprüche

1. Verfahren zur Verminderung des Hydroxylgruppeninhalts in nach dem MCVD-Verfahren hergestellten optischen Faservorformen, bei dem der Wasserstoff in der Hydroxylgruppe durch Deuterium ersetzt wird, wobei die Vorformen jeweils von einem Trägerrohr aus Kiesel-säure gehaltert werden, dadurch gekennzeich-net, daß nur der Wasserstoff der an den Innenwänden des aus Kieselsäure bestehenden Trägerrohrs (6) vorhandenen Hydroxylgruppen an Ort und Stelle zumindest an diesen Innenwänden gegen Deuterium ausgetauscht wird.

2. Verfahren nach Anspruch 1, dadurch gekennzeichnet, daß der Austausch zwischen Wasserstoff und Deuterium dadurch erhalten wird, daß man zuerst die Deuterium-Adsorption wenigstens an den Innenwänden des Trägerrohrs induziert und dann termisch den Austausch aktiviert.

3. Verfahren nach Anspruch 2, dadurch gekennzeichnet, daß man das Trägerrohr (6) in einer Deuteriumatmosphäre innerhalb eines geschlossenen Muffelofens (5), der unter Druck gesetzt werden kann, bei einer Temperatur im Bereich von 100° bis 200°C für einige Stunden und dann bei einer Temperatur von wenigstens 500°C für etwa eine Stunde anordnet.

4. Verfahren nach Anspruch 2, dadurch gekennzeichnet, daß man das Trägerrohr (6) da anordnet, wo die Vorform der optischen Faser durch das MCVD-Verfahren hergestellt wird, und es rotiert, und daß man Deuterium für einige Stunden ins Innere des Trägerrohrs gibt und die Temperatur mit einem Muffelofen zwischen 100° und 200°C hält und dann das Rohr bis zu einer Temperatur von wenigstens 500°C entlang Ringbereichen mit Hilfe eines Ringofens erhitzt, der parallel zur Rohrachse verschiebbar ist.

## Revendications

1. Procédé pour diminuer la teneur en groupements oxhydryles des préformes pour fibres optiques réalisées suivant le procédé MCVD, où l'hydrogène dans le groupement oxhydryle est remplacé par du deutérium, chaque préforme ayant pour support un tube support en verre de silice, caractérisé en ce que seul l'hydrogène des groupements. oxhydryles présents dans la surface intérieure du tube support en verre de silice (6) est remplacé in situ par du deutérium au moins à proximité de ladite surface intérieure.

2. Procédé suivant la revendication 1, caractérisé en ce que l'on obtient l'échange de l'hydrogène par le deutérium d'abord en induisant l'adsorption du deutérium au moins sur la surface intérieure dudit tube support, puis en activant thermiquement l'échange.

3. Procédé suivant la revendication 2, charactérisé en ce que ledit tube support (6) est placé en atmosphère de deutérium à l'intérieur d'un four à moufle (5), hermétiquement fermé et avec possibilité de pressurisation, à une température dans la gamme de 100 à 200°C pendant quelques heures, puis à une temperature d'au moins 500°C pendant environ une heure.

4. Procédé suivant la revendication 2, caractérisé en ce que l'on place ledit tube support (6) à l'endroit où la préforme pour fibres optiques est fabriquée selon le procédé MCVD et on le fait tourner, on envoie à l'intérieur de ce tube due deutérium pendant quelques heures en maintenant la température entre 100 et 200°C avec un four à moufle, puis le tube est chauffé jusqu'à une température d'au moins 500°C autour de zones annulaires au moyen d'un four de forme annulaire, capable de se déplacer parallèlement à l'axe du tube.

Fig. 1

Fig. 2